# EUROPÄISCHE PATENTSCHRIFT

(11) **EP 1 645 044 B1**
(45) Veröffentlichungstag und Bekanntmachung des Hinweises auf die Patenterteilung: **07.11.2007**
(21) Anmeldenummer: 04733336.4
(22) Anmeldetag: 17.05.2004
(51) Int. Cl.: H04B 1/38, B60R 11/02

(54) **Halterung für ein Mobiltelefon und Verfahren zum Betrieb eines derart gehaltenen Mobiltelefons in einem Fahrzeug**
Mobile telephone holder and method for operating a mobile telephone mounted in a holder in a vehicle
Support pour téléphone mobile et procédé pour faire fonctionner un téléphone mobile monte sur un tel support dans un véhicule

(30) Priorität: 10.07.2003 DE 10331412
(43) Veröffentlichungstag der Anmeldung: 12.04.2006
(73) Patentinhaber: Bayerische Motoren Werke Aktiengesellschaft, 80809 München (DE)
(72) Erfinder: WINKLER, Hans-Jürgen, 86916 Kaufering (DE); LACHMUND, Mathias, 98574 Schmalkalden (DE); SCHMATZ, Matthias, 82152 Krailling (DE); DAMMANN, Eberhard, 85598 Baldham (DE); GÖTHEL, Joachim, 80997 München (DE); SCHRAMM, Peter, 85386 Eching (DE); REICK, Roman, 80995 München (DE)
(86) Internationale Anmeldenummer: PCT/EP2004/005285
(87) Internationale Veröffentlichungsnummer: WO 2005/006582

(56) Entgegenhaltungen:
- DE-U- 20 120 882
- US-A- 5 832 390
- US-B1- 6 377 825

## Beschreibung

Die Erfindung zieht sich auf eine Halterung für ein Mobiltelefon in einem Fahrzeug, mit einem im Fahrzeug fest angeordneten Grundteil und mit einem in diesem und demgegenüber lösbar angeordneten Halteteil zur lösbaren Aufnahme eines Mobiltelefons, sowie auf ein Verfahren zum Betrieb eines derart gehalterten Mobiltelefons in einem Fahrzeug

Eine derartige Halterung ist beispielsweise aus der DE 297 13 239 U1 bekannt. Bei dieser aus Grundteil und Halteteil bestehenden zweiteiligen Halterung erfolgt die Stromversorgung und die datentechnische Verbindung vom Bordnetz des Fahrzeugs zum Grundteil und von diesem zum Haltteil mittels mehradriger Verbindungskabel.

In letzter Zeit sind auch Mobiltelefone bekannt geworden, die eine kurzreichweitige Funkverbindung zu einem im Fahrzeug an anderer Stelle angeordneten und mit dem Bordnetz datentechnisch verbundenen Steuergerät herzustellen in der Lage sind. Eine datentechnische Verbindung zum Bordnetz über Grundteil und Halteteil ist dann entbehrlich und auch nicht mehr vorgesehen. Ist das Fahrzeug mit einem derartigen Steuergerät ausgerüstet, können im Fahrzeug dann auch nur solche Mobiltelefone eingesetzt werden, die eine kurzreichweitige Funkverbindung aufbauen können.

Derartige Beispiele sind aus US 6 377 825 und DE 20120882 bekannt.

Der Erfindung liegt die Aufgabe zugrunde, eine Halterung der eingangs genannten Art zu schaffen, mit der ein Betrieb von Mobiltelefonen mit kurzreichweitiger Funkverbindung auch bei fehlender hardwaremäßiger datentechnischer Verbindung zum Bordnetz möglich ist, sowie ein Verfahren zu schaffen, mit dem ein Betrieb von Mobiltelefonen mit kurzreichweitiger Funkverbindung auch bei fehlender hardwaremäßiger datentechnischer Verbindung zum Bordnetz möglich ist.

Diese Aufgabe wird durch die Merkmale des Patentanspruchs 1 gelöst.

Für das erfindungsgemäße Verfahren wesentlich ist die kurzreichweitige Sende-/Empfangseinrichtung des Halteteils, das seinerseits eine drahtgebundene elektrische Verbindung mit dem Mobiltelefon besitzt. Über die Sende-/Empfangseinrichtung wird eine Funkverbindung mit einer korrespondierenden weiteren Sende-/Empfangseinrichtung in einem Steuergerät hergestellt. Das Steuergerät ist mit einer fahrzeuginternen Freisprecheinrichtung verbunden und stellt die Verbindung des Mobiltelefons zu einem zellularen Telefonnetz her.

Eine Verbesserung der Erfindung besteht darin, dass das Halteteil eine Erkennungsschaltung für eine im Mobiltelefon selbst vorhandene kurzreichweitige Sende-/Empfangseinrichtung aufweist. Über eine geeignete Programmierung des Mobiltelefons ist es möglich, dessen kurzreichweitige Sende-/Empfangseinrichtung zu deaktivieren und die entsprechende Einrichtung des Halteteils zu aktivieren. Damit können sowohl Mobiltelefone mit als auch ohne kurzreichweitige Funkverbindung in der Halterung angeordnet werden. Eine unerwünschte Wechselwirkung konkurrierender Sende- /Empfangseinrichtungen ist dabei ausgeschlossen. In jedem Fall findet die Kommunikation zwischen Mobiltelefon und dem Steuergerät im Fahrzeug über die kurzreichweitige Sende-/Empfangseinrichtung der Halterung statt.

Umgekehrt ist es auch möglich, die entsprechende Einrichtung des Halteteils zu deaktivieren. Damit können auch hier sowohl Mobiltelefone mit als auch ohne kurzreichweitige Funkverbindung in der Halterung angeordnet werden. Eine unerwünschte Wechselwirkung konkurrierender Sende- /Empfangseinrichtungen ist dabei ebenfalls ausgeschlossen. In diesem Fall findet die Kommunikation zwischen Mobiltelefon und dem Steuergerät im Fahrzeug über die kurzreichweitige Sende-/Empfangseinrichtung des Mobiltelefons selbst statt.

An Hand der Zeichnung ist die Erfindung weiter erläutert. Es zeigt:
- Fig. 1: eine Vorrichtung zur Realisierung des erfindungsgemäßen Verfahrens, bei der das Mobiltelefon im Halteteil befestigt ist und
- Fig. 2: die Vorrichtung von Fig. 1 mit aus dem Halteteil entnommenem Mobiltelefon.

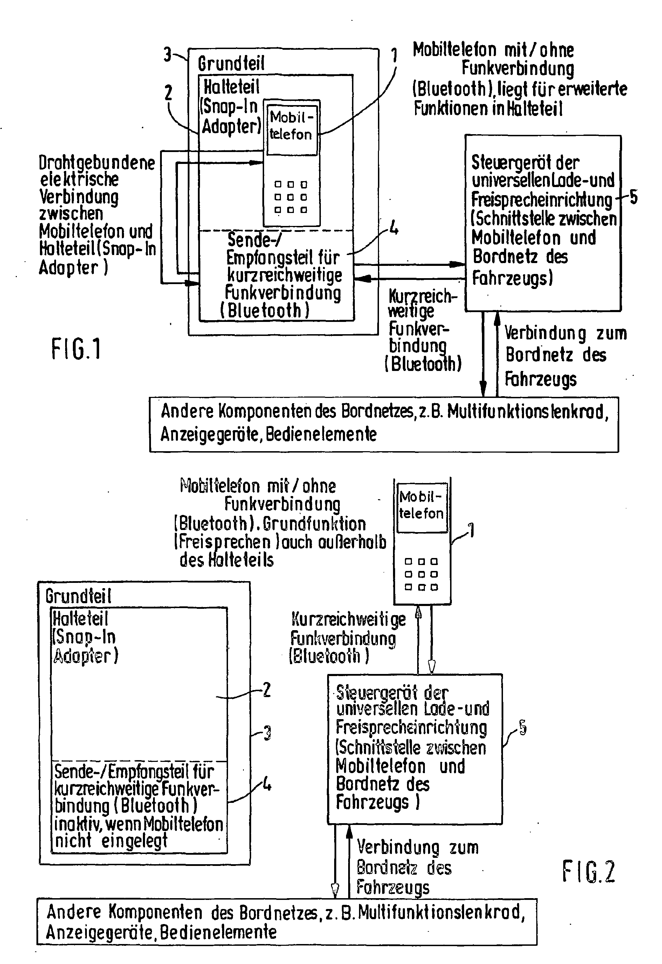

In Fig. 1 ist ein Mobiltelefon 1 lösbar in einem Halteteil 2 befestigt. Das Halteteil 2 seinerseits ist lösbar in einem im Fahrzeug fest angeordneten Grundteil 3 gehalten. Es besitzt eine kurzreichweitige Sende-/Empfangseinrichtung 4, die seinerseits eine drahtgebundene elektrische Verbindung (ebenfalls nicht gezeigt) mit dem Mobiltelefon 1 besitzt. Damit lässt sich eine Funkverbindung mit einer korrespondierenden weiteren Sende-/Empfangseinrichtung in einem Steuergerät 5 herstellen. Das Steuergerät 5 ist mit einer fahrzeuginternen Freisprecheinrichtung (nicht gezeigt) verbunden, die eine Verbindung des Mobiltelefons 1 zu einem zellularen Telefonnetz herstellt.

Es sei zunächst der Fall betrachtet, dass das Mobiltelefon 1 keine kurzreichweitige Funkverbindung, typischerweise gemäß dem Bluetooth-Standard besitzt. Über die kurzreichweitige Funkverbindung der Sende-/Empfangseinrichtung 4, im folgenden als Bluetooth-Schnittstelle bezeichnet, können mehrere Funktionen unterstützt werden. Für einen Teil der Funktionen, im folgenden als Grundfunktionen bezeichnet, existiert ein offengelegter Standard. Es handelt sich dabei insbesondere um die Möglichkeit des eigentlichen Freisprechens. Dieses lässt sich gemäß dem offengelegten Bluetooth-Standard, dem Hands-free Profil, über die Bluetooth-Schnittstelle zwischen Halteteil 2 und Steuergerät 5 umsetzen.

Beim alternativen Fall eines Mobiltelefons 1 mit kurzreichweitiger Funkverbindung ist es erfindungsgemäß vorgesehen, diese kurzreichweitige Funkverbindung zu blockieren, sobald das Mobiltelefon 1 im Halteteil 2 eingelegt ist. Die Sende-/Empfangseinrichtung 4 stellt wiederum die Funkverbindung mit der korrespondierenden Sende-/Empfangseinrichtung im Steuergerät 5 her und ermöglicht analog zum vorhin beschriebenen Fall das Freisprechen über die Bluetooth-Schnittstelle zwischen Halteteil 2 und Steuergerät 5 umzusetzen.

Bei Mobiltelefonen bestimmter Hersteller ist es nicht möglich, das im Mobiltelefon üblicherweise vorhandene Telefonbuch über die kurzreichweitige Sende-/Empfangseinrichtung des Mobiltelefons zum Steuergerät zu übertragen. Es ist aber möglich, diese Daten über die drahtgebundene elektrische Verbindung des Halteteils 2 auszulesen und über dessen Sende-/Empfangseinrichtung zum Steuergerät 5 zu übertragen.

Wird das Telefonbuch im Steuergerät 5 gespeichert und bei jedem Einlegen des Mobiltelefons 1 im Halteteil 2 wieder aktualisiert, ist es möglich, auch - wie in Fig. 2 dargestellt - bei nicht im Halteteil 2 eingelegtem Mobiltelefon 1 dessen Telefonbuch zu verwenden und beispielsweise auf einem Display im Fahrzeug-Armaturenbrett darzustellen. Voraussetzung hierfür ist dann lediglich, dass das Telefonbuch dem Mobiltelefon mittels einer entsprechenden Kennung zugeordnet wird. Diese Kennung kann vom Mobiltelefon selbst oder dem Halteteil ausgegeben werden.

## Patentansprüche

1. Verfahren zum Betrieb eines Mobiltelefons in einem Fahrzeug, bei dem das Mobiltelefon lösbar in einem Halteteil befestigt und das Halteteil seinerseits lösbar in einem im Fahrzeug fest angeordneten Grundteil gehalten wird, bei dem über eine kurzreichweitige Sende-/Empfangseinrichtung (4) des Halteteils (2), das seinerseits eine drahtgebundene elektrische Verbindung mit dem Mobiltelefon (1) besitzt, eine Funkverbindung mit einer korrespondierenden weiteren Sende-/Empfangseinrichtung in einem Steuergerät (5) hergestellt wird, wobei das Steuergerät mit einer fahrzeuginternen Freisprecheinrichtung verbunden ist und eine Verbindung des Mobiltelefons zu einem zellularen Telefonnetz herstellt, **dadurch gekennzeichnet, dass** über eine im Halteteil vorhandene Erkennungsschaltung für eine im Mobiltelefon selbst vorhandene kurzreichweitige Sende-/Empfangseinrichtung die kurzreichweitige Sende-/Empfangseinrichtung des Mobiltelefons blockiert wird.

2. Verfahren zum Betrieb eines Mobiltelefons in einem Fahrzeug, bei dem das Mobiltelefon lösbar in einem Halteteil befestigt und das Halteteil seinerseits lösbar in einem im Fahrzeug fest angeordneten Grundteil gehalten wird, bei dem über eine kurzreichweitige Sende-/Empfangseinrichtung (4) des Halteteils (2), das seinerseits eine drahtgebundene elektrische Verbindung mit dem Mobiltelefon (1) besitzt, eine Funkverbindung mit einer korrespondierenden weiteren Sende-/Empfangseinrichtung in einem Steuergerät (5) hergestellt wird, wobei das Steuergerät mit einer fahrzeuginternen Freisprecheinrichtung verbunden ist und eine Verbindung des Mobiltelefons zu einem zellularen Telefonnetz herstellt, **dadurch gekennzeichnet, dass** über eine im Halteteil vorhandene Erkennungsschaltung für eine im Mobiltelefon selbst vorhandene kurzreichweitige Sende-/Empfangseinrichtung die kurzreichweitige Sende-/Empfangseinrichtung des Halteteils blockiert wird.

3. Verfahren nach Anspruch 1, **dadurch gekennzeichnet, dass** bei einem Mobiltelefon mit kurzreichweitiger Sende- /Empfangseinrichtung Daten, die mittels dieser Sende- /Empfangseinrichtung nicht ausgelesen und übertragen werden können, über die drahtgebundene elektrische Verbindung des Halteteils ausgelesen und über dessen Sende-/Empfangseinrichtung zum Steuergerät übertragen werden.

## Claims

1. A method of operating a mobile telephone in a vehicle, wherein the mobile telephone is releasably fastened in a retaining part and the retaining part is releasably held in a base part permanently disposed in the vehicle, wherein a radio connection, via a short-range transmitting and receiving device (4) in the retaining part (2) with a wired electrical connection to the mobile telephone (1), is made to a corresponding other transmitting and receiving device in a control unit (5), wherein the control unit is connected to a hands-free device inside the vehicle and connects the mobile telephone to a cellular telephone network, **characterised in that** the short-range transmission and receiving device in the mobile telephone is blocked by a circuit present in the retaining part for recognising a short-range transmission and receiving device present in the mobile telephone itself.

2. A method of operating a mobile telephone in a vehicle, wherein the mobile telephone is releasably fastened in a retaining part and the retaining part is releasably held in a base part permanently disposed in the vehicle, wherein a radio connection, via a short-range transmitting and receiving device (4) in the retaining part (2) with a wired electrical connection to the mobile telephone (1), is made to a corresponding other transmitting and receiving device in a control unit (5), wherein the control unit is connected to a hands-free device inside the vehicle and connects the mobile telephone to a cellular telephone network, **characterised in that** the short-range transmission and receiving device in the retaining part is blocked by a circuit in the retaining part for recognising a short-range transmission and receiving device present in the mobile telephone itself.

3. A method according to claim 1, **characterised in that** in the case of a mobile telephone with a short-range transmission and receiving device, data which cannot be read out and transmitted by the said transmission and receiving device are read out via the wired electrical connection to the retaining part and transmitted by the transmission and receiving device thereof to the control unit.

## Revendications

1. Procédé pour faire fonctionner un téléphone mobile dans un véhicule selon lequel
le téléphone mobile est fixé de manière amovible dans une pièce de support,
la pièce de support est maintenue de manière amovible dans une pièce de base disposée fixement dans le véhicule, laquelle établit une liaison radio avec un autre dispositif émetteur/récepteur correspondant d'un appareil de commande (5) via un dispositif émetteur/récepteur (4) à ondes courtes de la pièce de support (2) qui présente une liaison électrique filaire avec le téléphone mobile (1), et
l'appareil de commande (5), relié à un dispositif mains libres à l'intérieur du véhicule, établit la liaison du téléphone mobile avec un réseau de téléphone cellulaire,
**caractérisé en ce que**
le dispositif émetteur/récepteur du téléphone mobile est bloqué via un circuit de détection de la pièce de support pour un dispositif émetteur/récepteur à ondes courtes du téléphone mobile à proprement parler.

2. Procédé pour faire fonctionner un téléphone mobile dans un véhicule selon lequel
le téléphone mobile est fixé de manière amovible dans une pièce de support,
la pièce de support est maintenue de manière amovible dans une pièce de base disposée fixement dans le véhicule, laquelle établit une liaison radio avec un autre dispositif émetteur récepteur correspondant d'un appareil de commande (5) via un dispositif émetteur/récepteur (4) à ondes courtes de la pièce de support (2) qui présente une liaison électrique filaire avec le téléphone mobile (1), et
l'appareil de commande (5) relié à un dispositif mains libres à l'intérieur du véhicule, établit la liaison de téléphone mobile avec un réseau de téléphone cellulaire,
**caractérisé en ce que**
le dispositif émetteur/ récepteur de la pièce de support est bloqué via un circuit de détection du la pièce de support pour un dispositif émetteur/récepteur à ondes courtes du le téléphone mobile à proprement parler.

3. Procédé selon la revendication 1
**caractérisé en ce que**
dans le cas d'un téléphone mobile avec un dispositif émetteur/récepteur à ondes courtes, des données ne pouvant être ni lues ni transmises à l'aide de ce dispositif émetteur/récepteur sont lues via la liaison électrique filaire de la pièce de support et transférées à l'appareil de commande via son dispositif émetteur/ récepteur.
